# EUROPEAN PATENT APPLICATION

(11) **EP 4 775 489 A2**
(43) Date of publication of application: **15.07.2026**
(21) Application number: 24862948.7
(22) Date of filing: 08.04.2024
(51) Int. Cl.: B63J 3/04, B63B 25/16, B63B 15/00, B63B 11/04, B63H 21/38, B63J 2/12, B63B 11/02, B63H 21/17, F02C 7/22, F02G 5/02

(54) **SHIP EQUIPPED WITH GAS TURBINE AND WASTE HEAT RECOVERY-BASED ELECTRIC PROPULSION SYSTEM**

(30) Priority: 05.09.2023 KR 20230117758; 05.09.2023 KR 20230117764; 06.09.2023 KR 20230118100; 06.09.2023 KR 20230118647; 15.12.2023 KR 20230183319
(71) Applicant: Hanwha Ocean Co., Ltd., Geoje-si, Gyeongsangnam-do 53302 (KR)
(72) Inventor: OH, Sae Jeong, Goyang-si, Gyeonggi-do 10504 (KR); LEE, Sang Min, Goyang-si, Gyeonggi-do 10391 (KR); JEON, Eui Joon, Seoul 03112 (KR); HWANG, Jong Kyu, Seongnam-si, Gyeonggi-do 13503 (KR); GANG, Geum Jun, Seoul 08017 (KR); SHIM, Jae Hwi, Seongnam-si, Gyeonggi-do 13568 (KR); LEE, U Shin, Seoul 04004 (KR); PARK, Shin Young, Seoul 05272 (KR)
(74) Representative: dompatent
(86) International application number: PCT/KR2024/004627
(87) International publication number: WO 2025/053364

(57) **Abstract**

Proposed is a ship equipped with a gas turbine and waste heat recovery-based electric propulsion system. The ship enhances gas turbine efficiency by including a stern area (C) consisting of a gas turbine (142) disposed in an engine room (141), and that generates electric power by combustion of a first fuel supplied from a second fuel tank (143) or a second fuel supplied from cargo tanks (TK1 to TK4) and supplies the power to an electric propulsion motor, the second fuel tank (143) disposed in an upper-side free space of the engine room (141), the top of the second fuel tank (143) being exposed to an upper deck (UD), and that supplies the first fuel to the gas turbine (142), and a waste heat recovery system (150) that converts waste heat from exhaust gas of the gas turbine (142) into electric power and supplies the power to the motor.

## Description

### Technical Field

An embodiment of the present disclosure relates to a bow-arranged deckhouse structure that places a deckhouse at the bow to enhance space utilization. Another embodiment of the present disclosure relates to a ship with the bow-arranged deckhouse structure in which a deckhouse of an LNG carrier is arranged at the bow to enhance space utilization in both the bow and stern areas. Still another embodiment of the present disclosure relates to a ship equipped with a gas turbine and waste heat recovery-based electric propulsion system configured to improve gas turbine efficiency.

### Background Art

In recent years, to comply with the strengthened greenhouse gas (GHG) and carbon dioxide reduction regulations of the International Maritime Organization (IMO 2050), attention has focused on ammonia (NH₃) as an alternative marine fuel. Ammonia is a carbon-free compound that releases zero carbon dioxide (CO₂) when combusted.

In particular, there is a need to develop electric propulsion ships utilizing ammonia-fueled gas turbines.

Meanwhile, the application of ammonia-fueled gas turbines to electric propulsion vessels reduces the space required onboard compared to conventional engines using fuels such as diesel (HFO, MGO, MDO, or LSMGO) or LNG. This reduction in volume enables the maintenance of vessel operational efficiency and stability. In addition, during ship construction, compliance with IMO SOLAS regulations may necessitate the rearrangement of compartments, including fuel tanks, fuel supply systems, and accommodation units.

Accordingly, there is a demand for a technology that can improve gas turbine efficiency and enhance space utilization at both the bow and stern of an LNG carrier by rearranging a deckhouse, which is conventionally located at the aft of a cargo area, while maintaining structural stability.

### Disclosure

### Technical Problem

An objective of the present disclosure is to provide a bow-arranged deckhouse structure that places a deckhouse at the bow to enhance space utilization. An objective of the present disclosure is to provide a ship with the bow-arranged deckhouse structure that can improve space utilization on the trunk deck. An objective of the present disclosure is to provide a ship equipped with a gas turbine and waste heat recovery-based electric propulsion system configured to improve gas turbine efficiency by generating electric power using a gas turbine by burning ammonia and liquefied natural gas (LNG), and recovering the waste heat from the gas turbine.

### Technical Solution

In order to achieve the above mentioned objectives, according to an embodiment of the present disclosure, there is provided a ship equipped with a gas turbine and waste heat recovery-based electric propulsion system, the ship including: a stern area consisting of: a gas turbine disposed in an engine room and configured to generate electric power by combustion of a first fuel supplied from a second fuel tank or a second fuel supplied from a cargo tank, and to supply the electric power to an electric propulsion motor; a second fuel tank disposed in an upper-side free space of the engine room, an upper end of the second fuel tank being exposed to an upper deck, and configured to supply the first fuel to the gas turbine; and a waste heat recovery system configured to convert waste heat from exhaust gas of the gas turbine into electric power and to supply the electric power to the electric propulsion motor.

In this case, the ship may further include: a cargo area in which the cargo tank used for storing and transporting LNG is disposed; and a bow area consisting of: a deckhouse located forward of the cargo area in a bow direction, spaced apart from an upper deck of the bow area by a predetermined height, and including a wheelhouse; a bosun store arranged below the upper deck; and a first cofferdam having a specific structure and arranged between the cargo area and both the deckhouse and the bosun store.

At this time, the waste heat recovery system may be a supercritical carbon dioxide (sCO₂) power system.

In addition, the supercritical CO₂ power system may be disposed on a stern side of an engine casing.

To be specific, the supercritical CO₂ power system may be disposed at a predetermined height above a sunken deck by means of pilotis.

In addition, the supercritical CO₂ power system may include: a heater disposed in the engine casing or a funnel and configured to recover waste heat of exhaust gas discharged from the gas turbine to heat carbon dioxide; a turbine configured to rotate by a supercritical state of the carbon dioxide heated by the heater to generate electric power; a compressor configured to compress carbon dioxide; a recuperator configured to perform heat exchange between carbon dioxide recovered from the turbine and carbon dioxide supplied from the compressor to the heater; a precooler configured to cool carbon dioxide that has passed through the recuperator from the turbine, and to supply the cooled carbon dioxide to the compressor; and a preheater configured to heat carbon dioxide supplied to the heater through heat exchange between exhaust gas that has passed through the heater and the carbon dioxide from the compressor that bypasses the recuperator.

In addition, the first fuel may be ammonia gas, and the second fuel may be boil-off gas (BOG), which is evaporated LNG, generated from the cargo tank or natural gas obtained by forced vaporization of LNG.

In this case, the cargo tank may be a membrane tank.

In addition, a top surface of the second fuel tank or a top surface of a second fuel tank's compartment may be formed to match height and shape of a trunk deck of the cargo tank.

In this case, the ship may further include: a fuel preparation room in which an ammonia supply system for supplying ammonia gas to the gas turbine is installed; and a cargo compressor room in which an LNG supply system is installed for supplying boil-off gas (BOG), which is evaporated LNG, or natural gas obtained by forced vaporization of LNG to the gas turbine.

In addition, the fuel preparation room may be arranged above the second fuel tank, and the cargo compressor room may be arranged above a trunk deck of the cargo area.

Alternatively, both the fuel preparation room and the cargo compressor room may be installed above the second fuel tank.

Alternatively, both the fuel preparation room and the cargo compressor room may be installed above a trunk deck of the cargo area.

In addition, the fuel preparation room and the cargo compressor room may be disposed separately on port and starboard sides, respectively, or arranged predominantly on either the port or starboard side.

In addition, a dual fuel generator engine (DFGE) may be additionally disposed in the engine room, and a first fuel tank configured to supply fuel to the DFGE may be disposed below the upper deck of the bow area.

In this case, a dual-fuel auxiliary boiler configured to produce steam required on board may be additionally disposed in the stern area.

At this time, the dual-fuel auxiliary boiler may be disposed on a first deck, the gas turbine may be disposed on a second deck, and the DFGE may be disposed on a third deck.

In addition, the dual-fuel auxiliary boiler may be disposed on a starboard side, the gas turbine may be disposed on a port side, and the DFGE may be disposed on the starboard side.

Alternatively, the dual-fuel auxiliary boiler may be disposed on a port side, the gas turbine may be disposed on a starboard side, and the DFGE may be disposed on the port side.

In addition, by means of an idle mode of the gas turbine, a gas combustion unit (GCU) mode of the dual-fuel auxiliary boiler, or the DFGE, BOG generated from the cargo tank may be combusted.

In addition, the first coffer dam may be formed in an "L" shape and may separate the deckhouse and the bosun store from the cargo tank of the cargo area.

In addition, the deckhouse may be supported at a predetermined height by a plurality of pilotis arranged in a specific pattern from the upper deck, thereby creating a bow mooring equipment area.

At this time, the pilotis may be arranged to be aligned with main webs of the bow area and main walls of cabins of the deckhouse.

In addition, a bow pump room may be compartmentalized and arranged beneath the bosun store.

At this time, a chain locker may be disposed in the bow pump room, and an anchor chain may be stowed in the chain locker via the bow mooring equipment area.

In addition, in a lower portion of the bow area, a forepeak tank, a bow pump room, and an equipment/tank arrangement area, in which the first fuel tank, a ballast water tank, a deckhouse equipment room, and a grey water holding tank are compartmentalized, may be arranged.

In addition, an electrical distribution panel room may be vertically disposed between the engine room and the second fuel tank, and an upper portion of the electrical distribution panel room may be exposed to the upper deck.

At this time, a second cofferdam may be installed between the electrical distribution panel room and the second fuel tank.

### Advantageous Effects

According to the present disclosure, by relocating the deckhouse and the wheelhouse toward the bow, an unobstructed view for navigation can be ensured, the height of each deck in the deckhouse can be minimized to reduce construction costs. In case of installing wind-assisted propulsion systems such as rotor sails or wing sails on the upper decks, visibility issues are resolved and the number of installations can be increased. In cases where fuel tanks storing hazardous substances like ammonia are installed at the stern, the deckhouse can be isolated to ensure safety. Vibrations and noise generated in the stern engine room can be blocked without requiring separate vibration or noise insulation structures. The trunk deck space can be efficiently utilized, and a piloti structure prevents safety accidents caused by mooring line snapback. Furthermore, the bow-arranged deckhouse structure can be applied to both newbuilds and retrofitted vessels.

In addition, the trunk deck space can be efficiently utilized.

Furthermore, electric power can be generated via the gas turbine by burning ammonia and LNG, and waste heat from the gas turbine can be recovered to enhance gas turbine efficiency.

### Description of Drawings

FIGS. 1 and 2 show the overall arrangement of a ship according to the present disclosure.
FIG. 3 shows a bow-arranged deckhouse structure of a ship according to an embodiment of the present disclosure.
FIG. 4 is a plan view of the bow-arranged deckhouse structure of a ship illustrated in FIG. 3.
FIG. 5 is an enlarged view of the stern area of a ship with a bow-arranged deckhouse structure according to another embodiment of the present disclosure.
FIG. 6 is a plan view of the ship with a bow-arranged deckhouse structure illustrated in FIG. 5.
FIG. 7 shows cross-sectional views of the tanks illustrated in FIG. 6.
FIG. 8 shows a ship equipped with a gas turbine and waste heat recovery-based electric propulsion system according to another embodiment of the present disclosure.
FIG. 9 shows the configuration of a waste heat recovery system of the ship equipped with a gas turbine and waste heat recovery-based electric propulsion system illustrated in FIG. 8.

### Mode for Invention

Hereinafter, embodiments of the present disclosure having the above-described features will be described in more detail with reference to the accompanying drawings.

A bow-arranged deckhouse structure of a ship according to an embodiment of the present disclosure enhances space utilization by arranging a deckhouse 110 in a bow (forward) section B . The structure includes: the deckhouse 110 located forward of a cargo area A in the bow direction, spaced apart from an upper deck UD of the bow area B by a predetermined height, and including a wheelhouse 111; a bosun store 120 arranged below the upper deck UD; and a cofferdam 130 having a specific structure and arranged between the cargo area A and both the deckhouse 110 and the bosun store 120.

At this time, the cargo may include various types of cargo, including liquefied gases, but is not limited thereto. The liquefied gases may include LNG, liquefied ammonia, liquefied hydrogen, LPG, and other liquefied gases. In the following, LNG is assumed as one representative type of cargo for description purposes.

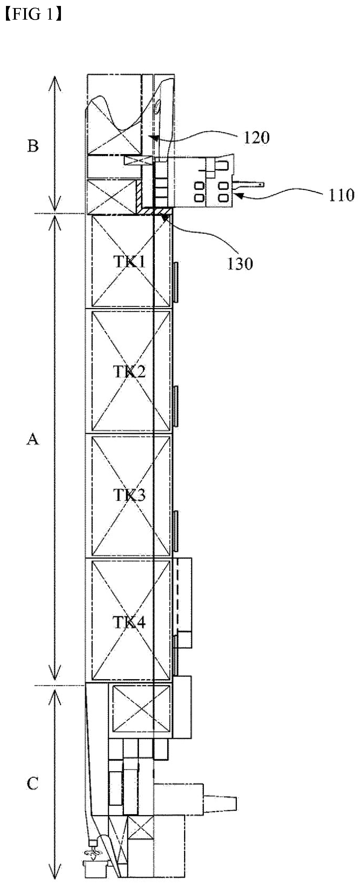

Hereinafter, referring to FIGS. 1 to 4, the bow-arranged deckhouse structure of a ship having the above-described configuration will be described in detail as follows.

First, the deckhouse 110 consists of: the wheelhouse 111 that controls the navigation of a ship, for example an LNG carrier; living quarters 112 for crew accommodation; and a radar mast 113. To be specific, the deckhouse 110 is located forward, in the bow direction, of the foremost cargo tank (Tank 1) TK1 of the cargo area A for storing and transporting liquefied gases, particularly LNG, and is spaced at a predetermined height above the upper deck UD of the bow area B.

In this case, the deckhouse 110 is relocated from a conventional stern (aft) section C to the bow area B, with the wheelhouse 111 provided at the uppermost portion of the bow area B, thereby ensuring an unobstructed view for navigation. Compared to a conventional aft-mounted deckhouse 110, the height of the deckhouse 110 need not be increased, allowing the height of each deck to be minimized. This configuration provides additional clearance for the air draft of the hull exposed above the waterline, enabling passage under relatively low bridges, and also reduces construction costs by lowering the height of the deckhouse 110.

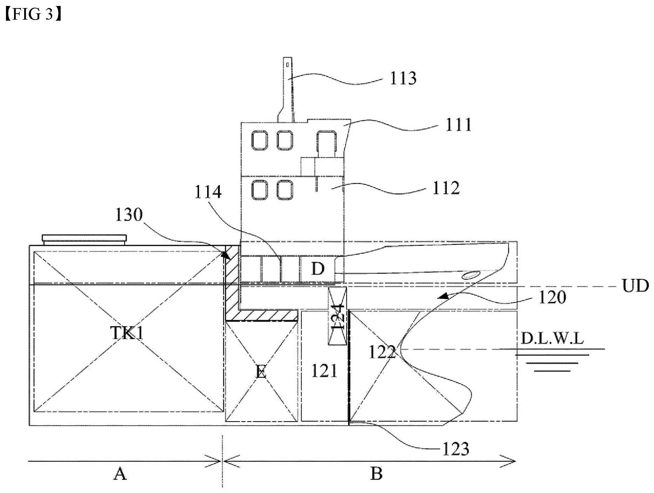

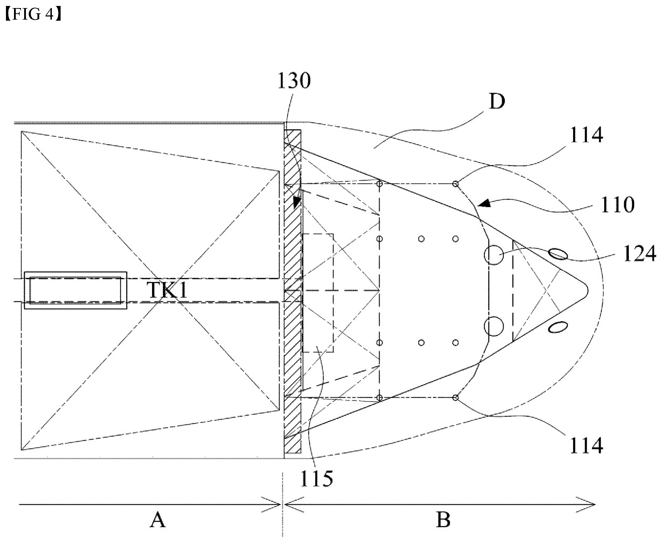

In addition, as illustrated in FIGS. 3 and 4, the deckhouse 110 is supported at a predetermined height by a plurality of pilotis 114 arranged in a specific pattern from the upper deck UD. This arrangement creates a bow mooring equipment area D beneath the deckhouse 110, where the pilotis 114 help prevent mooring line snapback and provide adequate space for arranging mooring equipment such as winches. In this case, the snapback refers to the sudden and violent recoil of mooring chains when the chains break, potentially striking nearby crew members or equipment.

In addition, the arrangement and number of pilotis 114 may be determined based on the weight of the deckhouse 110 and the structural stability of the deckhouse 110, and may be optimally arranged.

In addition, the pilotis 114 are arranged to be symmetrically aligned with the main webs of the bow area B and the main walls of the cabins of the deckhouse 110, so that the weight of the deckhouse 110 is evenly distributed, thereby ensuring structural stability and uniformity.

In addition, referring to FIG. 4, the pilotis 114 may be arranged so as not to interfere with an anchor chain stowed in a chain locker 124. For example, the pilotis 114 may be positioned to avoid overlapping with the path of the anchor chain, so that any impairment of mooring performance may be prevented.

In addition, as illustrated in FIG. 4, the front face of the deckhouse 110 may be formed in a conventional straight shape to provide sufficient space, or may be designed to be streamlined to minimize wind resistance during navigation.

Next, referring to FIG. 3, the bosun store 120 is arranged beneath the upper deck UD and is configured to store equipment, ropes, and lifesaving appliances used by the crew during deck operations.

In addition, as illustrated in FIG. 4, an elevator and a stair trunk 115, providing a passage between the upper deck UD and the deckhouse 110, may be arranged in the transverse direction to secure space for the bow mooring equipment area D. The stair trunk 115 may be positioned to be aligned with the main walls of the cabins of the deckhouse 110, thereby complementing and supporting the deckhouse 110 to ensure structural stability and uniformity.

In addition, as illustrated in FIG. 3, a bow pump room 121 is compartmentalized and arranged beneath the bosun store 120, with fuel oil pumps installed therein. When required by the shipowner, adequate space may be provided for the installation of a bow thruster. A bulkhead 123 between the bow pump room 121 and a forepeak tank 122 may be arranged to comply with the collision bulkhead requirements of IMO SOLAS regulations.

At this time, the deckhouse 110 may also be positioned aft of the bulkhead 123, which serves as a collision bulkhead, in order to comply with IMO SOLAS regulations.

In addition, as illustrated in FIG. 3, the chain locker 124 and a bilge well are arranged in the bow pump room 121, and the anchor chain may be stowed in the chain locker 124 via the bow mooring equipment area D. Considering hull shape and deck area, it is preferable that the chain locker 124 and the bilge well are positioned within the compartment of the bow pump room 121. The installation positions of the chain locker 124 and the bilge well may vary depending on the arrangements of the mooring equipment and the pilotis 114.

In addition, as illustrated in FIG. 3, in the lower portion of the bow area B, the forepeak tank 122, the bow pump room 121, and an equipment/tank arrangement area E, in which a first fuel tank, a ballast water tank, a deckhouse equipment room, and a grey water holding tank are compartmentalized, are arranged. The deckhouse 110-related compartments or tanks may be arranged to reduce deckhouse space and secure space for the bosun store 120, thereby enhancing space utilization. The arrangement also allows for the placement of trunks to enable pipe duct access and ventilation.

At this time, the first fuel tank may store fuel oil for a dual fuel generator engine (DFGE), and, for example, may be a fuel tank containing heavy fuel oil (HFO), marine gas oil (MGO), marine diesel oil (MDO), or low sulfur marine gas oil (LSMGO).

In addition, the forepeak tank 122 may be arranged, due to the characteristics of an LNG carrier, for the purpose of achieving an even trim to compensate for heavy aft trim or for propeller inspection. If no trim issues are present, the tank may alternatively be left as a void.

Next, referring to FIGS. 3 and 4, the cofferdam 130 is formed with a specific structure and arranged between the foremost cargo tank TK1 of the cargo area A and both the deckhouse 110 and the bosun store 120, thereby isolating the deckhouse 110 and the bosun store 120 from the hazardous cargo area A.

That is, as illustrated in FIG. 3, the cofferdam 130 is formed in an "L"-shaped configuration, separating the deckhouse 110 and the bosun store 120 from the cargo tank TK1 of the cargo area A, thereby serving as a buffer and converting the deckhouse 110 and the bosun store 120 into a safe area.

Meanwhile, in case that the first fuel tank in the equipment/tank arrangement area E is disposed as an independent tank, it is not necessary to install a cofferdam in the same manner as a membrane-type tank, and an L-shaped cofferdam 130 may be applied to reduce costs.

Thus, according to the configuration of the bow-arranged deckhouse structure of a ship as described above, by relocating the deckhouse and the wheelhouse toward the bow, an unobstructed view for navigation may be ensured, the height of each deck in the deckhouse may be minimized to reduce construction costs. In case of installing wind-assisted propulsion systems such as rotor sails or wing sails on the upper decks, visibility issues are resolved and the number of installations may be increased.

In addition, according to the configuration of the bow-arranged deckhouse structure of a ship, a second fuel tank may be arranged at the stern where the conventional deckhouse was located, thereby shortening the distance between the fuel tank and the engine room. In particular, in case that liquefied gas is stored in the second fuel tank arranged at the stern, for example in case that the fuel tank stores hazardous substances such as ammonia as a liquefied gas fuel, the deckhouse may be isolated at the bow to ensure safety. Vibrations and noise generated in the stern engine room may be blocked without requiring separate vibration or noise insulation structures. The trunk deck space may be efficiently utilized, and a piloti structure prevents safety accidents caused by mooring line snapback. Furthermore, the bow-arranged deckhouse structure may be applied to both newbuilds and retrofitted vessels.

Meanwhile, a ship with a bow-arranged deckhouse structure according to another embodiment of the present disclosure is an LNG carrier, in which a deckhouse 110 of the LNG carrier is arranged in a bow area B so as to enhance space utilization in both the bow and stern areas. The ship includes: a cargo area A in which cargo tanks TK1 to TK4 used for storing and transporting LNG are arranged; and the bow area B consisting of: the deckhouse 110 located forward of the cargo area A in the bow direction, spaced apart from an upper deck UD of the bow area by a predetermined height, and including a wheelhouse 111; a bosun store 120 arranged below the upper deck UD; and a cofferdam 130 having a specific structure and arranged between the cargo area A and both the deckhouse 110 and the bosun store 120.

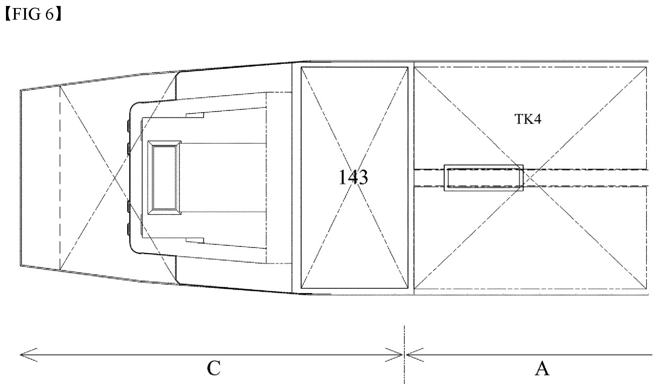

Hereinafter, the ship with a bow-arranged deckhouse structure having the above-described configuration will be described in detail with reference to FIGS. 1 to 7.

First, the deckhouse 110 consists of: the wheelhouse 111 that controls the navigation of an LNG carrier; living quarters 112 for crew accommodation; and a radar mast 113. To be specific, the deckhouse 110 is located forward, in the bow direction, of the foremost cargo tank (Tank 1) TK1 of the cargo area A where the cargo tanks TK1 to TK4 used for storing and transporting LNG are arranged, and is spaced at a predetermined height above the upper deck UD of the bow area B.

In this case, the deckhouse 110 is relocated from a conventional stern (aft) section C to the bow area B, with the wheelhouse 111 provided at the uppermost portion of the bow area B, thereby ensuring an unobstructed view for navigation. Compared to a conventional aft-mounted deckhouse 110, the height of the deckhouse 110 need not be increased, allowing the height of each deck to be minimized. This configuration provides additional clearance for the air draft of the hull exposed above the waterline, enabling passage under relatively low bridges, and also reduces construction costs by lowering the height of the deckhouse 110.

In addition, as illustrated in FIGS. 3 and 4, the deckhouse 110 is supported at a predetermined height by a plurality of pilotis 114 arranged in a specific pattern from the upper deck UD. This arrangement creates a bow mooring equipment area D beneath the deckhouse 110, where the pilotis 114 help prevent mooring line snapback and provide adequate space for arranging mooring equipment such as winches. In this case, the snapback refers to the sudden and violent recoil of mooring chains when the chains break, potentially striking nearby crew members or equipment.

In addition, the arrangement and number of pilotis 114 may be determined based on the weight of the deckhouse 110 and the structural stability of the deckhouse 110, and may be optimally arranged.

In addition, the pilotis 114 are arranged to be symmetrically aligned with the main webs of the bow area B and the main walls of the cabins of the deckhouse 110, so that the weight of the deckhouse 110 is evenly distributed, thereby ensuring structural stability and uniformity.

In addition, referring to FIG. 4, the pilotis 114 may be arranged so as not to interfere with an anchor chain stowed in a chain locker 124. For example, the pilotis 114 may be positioned to avoid overlapping with the path of the anchor chain, so that any impairment of mooring performance may be prevented.

In addition, as illustrated in FIG. 4, the front face of the deckhouse 110 may be formed in a conventional straight shape to provide sufficient space, or may be designed to be streamlined to minimize wind resistance during navigation.

Next, referring to FIG. 3, the bosun store 120 is arranged beneath the upper deck UD and is configured to store equipment, ropes, and lifesaving appliances used by the crew during deck operations.

In addition, as illustrated in FIG. 4, an elevator and a stair trunk 115, providing a passage between the upper deck UD and the deckhouse 110, may be arranged in the transverse direction to secure space for the bow mooring equipment area D. The stair trunk 115 may be positioned to be aligned with the main walls of the cabins of the deckhouse 110, thereby complementing and supporting the deckhouse 110 to ensure structural stability and uniformity.

In addition, as illustrated in FIG. 3, a bow pump room 121 is compartmentalized and arranged beneath the bosun store 120, with fuel oil pumps installed therein. When required by the shipowner, adequate space may be provided for the installation of a bow thruster. A bulkhead 123 between the bow pump room 121 and a forepeak tank 122 may be arranged to comply with the collision bulkhead requirements of IMO SOLAS regulations.

At this time, the deckhouse 110 may also be positioned aft of the bulkhead 123, which serves as a collision bulkhead, in order to comply with IMO SOLAS regulations.

In addition, as illustrated in FIG. 3, the chain locker 124 and a bilge well are arranged in the bow pump room 121, and the anchor chain may be stowed in the chain locker 124 via the bow mooring equipment area D. Considering hull shape and deck area, it is preferable that the chain locker 124 and the bilge well are positioned within the compartment of the bow pump room 121. The installation positions of the chain locker 124 and the bilge well may vary depending on the arrangements of the mooring equipment and the pilotis 114.

In addition, as illustrated in FIG. 3, in the lower portion of the bow area B, the forepeak tank 122, the bow pump room 121, and an equipment/tank arrangement area E, in which a first fuel tank, a ballast water tank, a deckhouse equipment room, and a grey water holding tank are compartmentalized, are arranged. The deckhouse 110-related compartments or tanks may be arranged to reduce deckhouse space and secure space for the bosun store 120, thereby enhancing space utilization. The arrangement also allows for the placement of trunks to enable pipe duct access and ventilation.

At this time, the first fuel tank may store fuel oil for a dual fuel generator engine (DFGE), and, for example, may be a fuel tank containing heavy fuel oil (HFO), marine gas oil (MGO), marine diesel oil (MDO), or low sulfur marine gas oil (LSMGO).

In addition, the forepeak tank 122 may be arranged, due to the characteristics of an LNG carrier, for the purpose of achieving an even trim to compensate for heavy aft trim or for propeller inspection. If no trim issues are present, the tank may alternatively be left as a void.

Next, referring to FIGS. 3 and 4, the cofferdam 130 is formed with a specific structure and arranged between the foremost cargo tank TK1 of the cargo area A and both the deckhouse 110 and the bosun store 120, thereby isolating the deckhouse 110 and the bosun store 120 from the hazardous cargo area A.

That is, as illustrated in FIG. 3, the cofferdam 130 is formed in an "L"-shaped configuration, separating the deckhouse 110 and the bosun store 120 from the cargo tank TK1 of the cargo area A, thereby serving as a buffer and converting the deckhouse 110 and the bosun store 120 into a safe area.

Meanwhile, in case that the first fuel tank in the equipment/tank arrangement area E is disposed as an independent tank, it is not necessary to install a cofferdam in the same manner as a membrane-type tank, and an L-shaped cofferdam 130 may be applied to reduce costs.

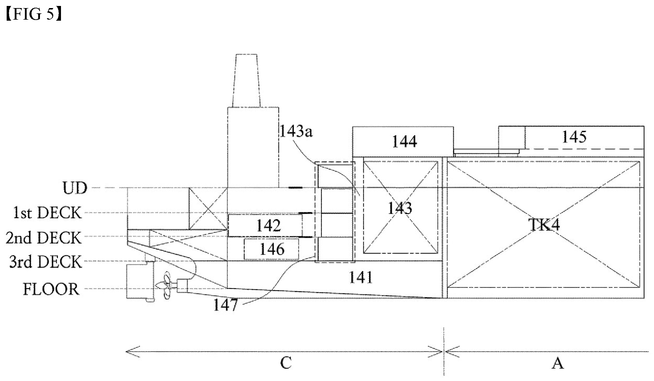

Next, referring to FIG. 5, a stern area C includes: a gas turbine 142, which is disposed in an engine room 141 and generates electric power through gas combustion to supply the electric power to an electric propulsion motor (not shown); and a second fuel tank 143, which is disposed in an upper-side free space of the engine room 141, a space secured by relocating the deckhouse 110 to the bow area B, has an upper end thereof exposed to the upper deck UD, and supplies gas fuel to the gas turbine 142.

In this case, the second fuel tank 143 may be installed in the free space created by the application of the propulsion motor of the engine room 141 and the gas turbine 142. The gas turbine 142 may generate electric power using a dual-gas fuel, that is, LNG supplied from the cargo tanks TK1 to TK4 and liquefied ammonia stored in the second fuel tank 143.

For example, in the case of an LNG carrier, the gas turbine 142 may generate electric power using BOG (boil off gas), produced from the cargo tanks TK1 to TK4 during vessel operation, or natural gas obtained by forced vaporization of LNG, and ammonia gas derived from liquefied ammonia stored in the second fuel tank 143.

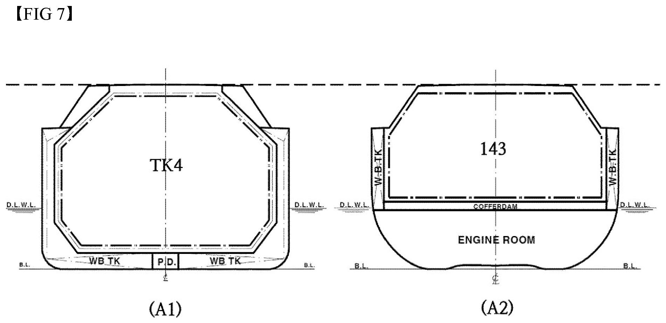

Meanwhile, as illustrated in FIGS. 5 and 7, the top surface of the second fuel tank 143, or the top surface of the second fuel tank 143's compartment, is formed to match the height and shape of the trunk deck of the cargo tank TK4, thereby ensuring structural continuity and reinforcing the longitudinal strength of the hull. In addition, separate reinforcing structures may be installed to ensure matching height and shape if necessary.

Due to the structure of the second fuel tank 143 and the trunk deck of the cargo tank TK4, all or part of a fuel preparation room 144 and/or a cargo compressor room 145 may be installed above the second fuel tank 143 and/or on the trunk deck of the cargo area A. This allows the free space created by relocating the deckhouse 110 to the bow area B to be utilized for arranging the fuel preparation room 144 and the cargo compressor room 145. In this case, an ammonia supply system, which supplies ammonia gas to the gas turbine 142, may be installed in the fuel preparation room 144, and an LNG supply system, which supplies BOG or natural gas obtained by forced vaporization of LNG to the gas turbine 142, may be installed in the cargo compressor room 145.

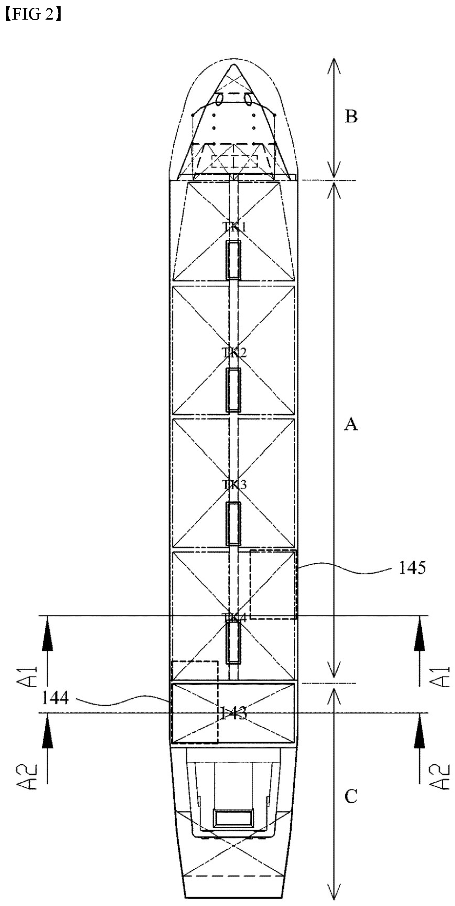

In addition, as shown in FIG. 2, the fuel preparation room 144 and the cargo compressor room 145 may be arranged separately on the port and starboard sides, respectively, or may be arranged predominantly on either the port or starboard side.

In addition, the fuel preparation room 144 is preferably arranged above the second fuel tank 143, and the cargo compressor room 145 is preferably arranged above the cargo tank TK4. However, both the fuel preparation room 144 and the cargo compressor room 145 may be arranged above the second fuel tank 143, or both may be arranged above the cargo tank TK4.

In addition, referring to FIG. 5, a DFGE 146, which uses fuels such as diesel and LNG, may be additionally installed in the engine room 141. The first fuel tank that supplies fuel to the DFGE 146 may be arranged in the lower portion of the bow area B, that is, in the equipment/tank arrangement area E (see FIG. 3), allowing the DFGE 146 to supplement electric power insufficiently generated by the gas turbine 142 or to provide electric power in situations where the gas turbine 142 cannot be operated.

In addition, a dual-fuel auxiliary boiler (not shown), which uses fuels such as diesel and LNG, may be additionally installed in the stern area C to produce and supply the steam required on board.

Meanwhile, as illustrated in FIG. 5, the dual-fuel auxiliary boiler (not shown) is arranged on the starboard side 1st deck, the gas turbine 142 is arranged on the port side 2nd deck, and the DFGE 146 is arranged on the starboard side 3rd deck, with hatches formed on each deck to secure the combustion air passage (aft side) for the gas turbine 142, thereby maximizing the utilization of available space.

In this case, the 1st deck, the 2nd deck, the 3rd deck, and the like, as illustrated in FIG. 5, are terms commonly used in the shipbuilding and marine field, and should be understood as decks sequentially arranged in the floor direction from the upper deck UD.

In addition, by combusting BOG generated from cargo tanks TK1 to TK4 by means of the idle mode of the gas turbine 142, the gas combustion unit (GCU) mode of the dual-fuel auxiliary boiler (not shown), and/or the DFGE 146, the GCU may be optionally omitted, thereby securing available space.

In addition, referring to FIG. 5, the second fuel tank 143 may be an independent tank, such as an IMO Type A tank, and a cofferdam 143a may be additionally installed around the IMO Type A tank. An electrical distribution panel room 147 is arranged vertically between the engine room 141 and the second fuel tank 143, with the top thereof exposed to the upper deck UD. Due to the cofferdam 143a and the electrical distribution panel room 147, the engine room 141 and the second fuel tank 143 may be doubly compartmentalized to ensure safety, and the internal space of the engine room 141 may be reduced.

Thus, according to the configuration of the ship with the bow-arranged deckhouse structure as described above, by relocating the deckhouse and the wheelhouse toward the bow, an unobstructed view for navigation may be ensured, the height of each deck in the deckhouse may be minimized to reduce construction costs. In case of installing wind-assisted propulsion systems such as rotor sails or wing sails on the upper decks, visibility issues are resolved and the number of installations may be increased. In addition, in case that the second fuel tank, storing hazardous substances such as ammonia, is installed in the stern area, the deckhouse may be isolated at the bow to ensure safety. Vibrations and noise generated in the stern engine room may be blocked without requiring separate vibration or noise insulation structures. The trunk deck space may be efficiently utilized, and a piloti structure prevents safety accidents caused by mooring line snapback. Furthermore, the bow-arranged deckhouse structure may be applied to both newbuilds and retrofitted vessels, and the trunk deck space may be efficiently utilized.

Meanwhile, a ship equipped with a gas turbine and waste heat recovery-based electric propulsion system according to still another embodiment of the present disclosure enhances the efficiency of a gas turbine 142 by including a stern area C consisting of: the gas turbine 142 disposed in an engine room 141 and configured to generate electric power by combustion of a first fuel supplied from a second fuel tank 143 or a second fuel supplied from cargo tanks TK1 to TK4, and to supply the electric power to an electric propulsion motor; the second fuel tank 143 disposed in an upper-side free space of the engine room 141, an upper end of the second fuel tank 143 being exposed to an upper deck UD, and configured to supply the first fuel to the gas turbine 142; and a waste heat recovery system 150 configured to convert waste heat from exhaust gas of the gas turbine 142 into electric power and to supply the electric power to the electric propulsion motor.

Hereinafter, the ship equipped with a gas turbine and waste heat recovery-based electric propulsion system having the above-described configuration will be described in detail with reference to FIGS. 1 to 9.

First, a deckhouse 110 may consist of: a wheelhouse 111 that controls the navigation of a ship, for example a liquefied gas carrier, living quarters 112 for crew accommodation, and a radar mast 113. To be specific, the deckhouse 110 is located forward, in the bow direction, of the foremost cargo tank (Tank 1) TK1 of a cargo area A where the cargo tanks TK1 to TK4 used for storing and transporting liquefied gases, particularly LNG, are arranged, and is spaced at a predetermined height above an upper deck UD of a bow area B.

In this case, the deckhouse 110 is relocated from a conventional stern (aft) section C to the bow area B, with the wheelhouse 111 provided at the uppermost portion of the bow area B, thereby ensuring an unobstructed view for navigation. Compared to a conventional aft-mounted deckhouse 110, the height of the deckhouse 110 need not be increased, allowing the height of each deck to be minimized. This configuration provides additional clearance for the air draft of the hull exposed above the waterline, enabling passage under relatively low bridges, and also reduces construction costs by lowering the height of the deckhouse 110.

In addition, as illustrated in FIGS. 3 and 4, the deckhouse 110 is supported at a predetermined height by a plurality of pilotis 114 arranged in a specific pattern from the upper deck UD. This arrangement creates a bow mooring equipment area D beneath the deckhouse 110, where the pilotis 114 help prevent mooring line snapback and provide adequate space for arranging mooring equipment such as winches. In this case, the snapback refers to the sudden and violent recoil of mooring chains when the chains break, potentially striking nearby crew members or equipment.

In addition, the arrangement and number of pilotis 114 may be determined based on the weight of the deckhouse 110 and the structural stability of the deckhouse 110, and may be optimally arranged.

In addition, the pilotis 114 are arranged to be symmetrically aligned with the main webs of the bow area B and the main walls of the cabins of the deckhouse 110, so that the weight of the deckhouse 110 is evenly distributed, thereby ensuring structural stability and uniformity.

In addition, referring to FIG. 4, the pilotis 114 may be arranged so as not to interfere with an anchor chain stowed in a chain locker 124. For example, the pilotis 114 may be positioned to avoid overlapping with the path of the anchor chain, so that any impairment of mooring performance may be prevented.

In addition, as illustrated in FIG. 4, the front face of the deckhouse 110 may be formed in a conventional straight shape to provide sufficient space, or may be designed to be streamlined to minimize wind resistance during navigation.

Next, referring to FIG. 3, the bosun store 120 is arranged beneath the upper deck UD and is configured to store equipment, ropes, and lifesaving appliances used by the crew during deck operations.

In addition, as illustrated in FIG. 4, an elevator and a stair trunk 115, providing a passage between the upper deck UD and the deckhouse 110, may be arranged in the transverse direction to secure space for the bow mooring equipment area D. The stair trunk 115 may be positioned to be aligned with the main walls of the cabins of the deckhouse 110, thereby complementing and supporting the deckhouse 110 to ensure structural stability and uniformity.

In addition, as illustrated in FIG. 3, a bow pump room 121 is compartmentalized and arranged beneath the bosun store 120, with fuel oil pumps installed therein. When required by the shipowner, adequate space may be provided for the installation of a bow thruster. A bulkhead 123 between the bow pump room 121 and a forepeak tank 122 may be arranged to comply with the collision bulkhead requirements of IMO SOLAS regulations.

At this time, the deckhouse 110 may also be positioned aft of the bulkhead 123, which serves as a collision bulkhead, in order to comply with IMO SOLAS regulations.

In addition, as illustrated in FIG. 3, the chain locker 124 and a bilge well are arranged in the bow pump room 121, and the anchor chain may be stowed in the chain locker 124 via the bow mooring equipment area D. Considering hull shape and deck area, it is preferable that the chain locker 124 and the bilge well are positioned within the compartment of the bow pump room 121. The installation positions of the chain locker 124 and the bilge well may vary depending on the arrangements of the mooring equipment and the pilotis 114.

In addition, as illustrated in FIG. 3, in the lower portion of the bow area B, the forepeak tank 122, the bow pump room 121, and an equipment/tank arrangement area E, in which a first fuel tank, a ballast water tank, a deckhouse equipment room, and a grey water holding tank are compartmentalized, are arranged. The deckhouse 110-related compartments or tanks may be arranged to reduce deckhouse space and secure space for the bosun store 120, thereby enhancing space utilization. The arrangement also allows for the placement of trunks to enable pipe duct access and ventilation.

At this time, the first fuel tank may store fuel oil for a dual fuel generator engine (DFGE), and, for example, may be a fuel tank containing heavy fuel oil (HFO), marine gas oil (MGO), marine diesel oil (MDO), or low sulfur marine gas oil (LSMGO).

In addition, the forepeak tank 122 may be arranged, due to the characteristics of an LNG carrier, for the purpose of achieving an even trim to compensate for heavy aft trim or for propeller inspection. If no trim issues are present, the tank may alternatively be left as a void.

Next, referring to FIGS. 3 and 4, the cofferdam 130 is formed with a specific structure and arranged between the foremost cargo tank TK1 of the cargo area A and both the deckhouse 110 and the bosun store 120, thereby isolating the deckhouse 110 and the bosun store 120 from the hazardous cargo area A.

That is, as illustrated in FIG. 3, the cofferdam 130 is formed in an "L"-shaped configuration, separating the deckhouse 110 and the bosun store 120 from the cargo tank TK1 of the cargo area A, thereby serving as a buffer and converting the deckhouse 110 and the bosun store 120 into a safe area.

Meanwhile, in case that the first fuel tank in the equipment/tank arrangement area E is arranged as an independent tank, it is not necessary to install a cofferdam in the same manner as a membrane-type tank, and an L-shaped cofferdam 130 may be applied to reduce costs.

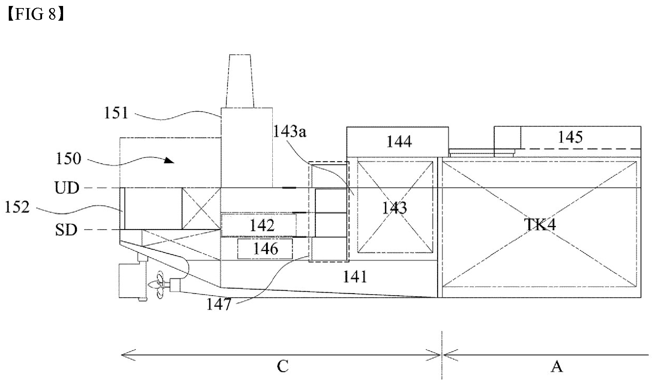

Next, referring to FIG. 8, the stern area C includes: the gas turbine 142 disposed in the engine room 141 and configured to generate electric power by combustion of a first fuel supplied from the second fuel tank 143 or a second fuel supplied from the cargo tanks TK1 to TK4, and to supply the electric power to an electric propulsion motor; the second fuel tank 143 disposed in an upper-side free space of the engine room 141, a space secured by relocating the deckhouse 110 to the bow area B, an upper end of the second fuel tank 143 being exposed to the upper deck UD, and configured to supply the first fuel to the gas turbine 142; and the waste heat recovery system 150 configured to convert waste heat from exhaust gas of the gas turbine 142 into electric power and to supply the electric power to the electric propulsion motor, thereby allowing the gas turbine 142 and the waste heat recovery system 150 to cooperatively generate electric power and supply the electric power to the electric propulsion motor.

In this case, the first fuel may be ammonia gas, and the second fuel may be BOG produced from the cargo tanks TK1 to TK4 or natural gas obtained by forced vaporization of LNG, and the cargo tanks TK1 to TK4 may be membrane tanks.

In other words, the gas turbine 142 may generate electric power using a dual-gas fuel including BOG supplied from cargo tanks TK1 to TK4 or natural gas obtained by forced vaporization of LNG, and ammonia gas from liquefied ammonia stored in the second fuel tank 143. The second fuel tank 143 may be installed in the free space created by the application of the propulsion motor of the engine room 141 and the gas turbine 142.

That is, in the case of an LNG carrier, the gas turbine 142 may generate electric power using BOG (boil off gas), produced from the cargo tanks TK1 to TK4 during vessel operation, or natural gas obtained by forced vaporization of LNG, and ammonia gas derived from liquefied ammonia stored in the second fuel tank 143.

Meanwhile, as illustrated in FIGS. 7 and 8, the top surface of the second fuel tank 143, or the top surface of the second fuel tank 143's compartment, is formed to match the height and shape of the trunk deck of the cargo tank TK4, thereby ensuring structural continuity and reinforcing the longitudinal strength of the hull. In addition, separate reinforcing structures may be installed to ensure matching height and shape if necessary.

Due to the structure of the second fuel tank 143 and the trunk deck of the cargo tank TK4, all or part of a fuel preparation room 144 and/or a cargo compressor room 145 may be installed above the second fuel tank 143 and/or on the trunk deck of the cargo area A. This allows the free space created by relocating the deckhouse 110 to the bow area B to be utilized for arranging the fuel preparation room 144 and the cargo compressor room 145. In this case, an ammonia supply system, which supplies ammonia gas to the gas turbine 142, may be installed in the fuel preparation room 144, and an LNG supply system, which supplies BOG or natural gas obtained by forced vaporization of LNG to the gas turbine 142, may be installed in the cargo compressor room 145.

In addition, as shown in FIG. 2, the fuel preparation room 144 and the cargo compressor room 145 may be arranged separately on the port and starboard sides, respectively, or may be arranged predominantly on either the port or starboard side.

In addition, the fuel preparation room 144 is preferably arranged above the second fuel tank 143, and the cargo compressor room 145 is preferably arranged above the cargo tank TK4. However, both the fuel preparation room 144 and the cargo compressor room 145 may be arranged above the second fuel tank 143, or both may be arranged above the cargo tank TK4.

In addition, referring to FIG. 8, a DFGE 146, which uses fuels such as diesel and LNG, may be additionally installed in the engine room 141. The first fuel tank supplying fuel to the DFGE 146 may be arranged in the lower portion of the bow area B, that is, in the equipment/tank arrangement area E (see FIG. 3), allowing the DFGE 146 to supplement electric power insufficiently generated by the gas turbine 142 or to provide electric power in situations where the gas turbine 142 cannot be operated.

In addition, a dual-fuel auxiliary boiler (not shown), which uses fuels such as diesel and LNG, may be additionally installed in the stern area C to produce and supply the steam required on board.

Meanwhile, as illustrated in FIG. 8, the dual-fuel auxiliary boiler (not shown) is arranged on the starboard side 1st deck, the gas turbine 142 is arranged on the port side 2nd deck, and the DFGE 146 is arranged on the starboard side 3rd deck, with hatches formed on each deck to secure the combustion air passage for the gas turbine 142, thereby maximizing the utilization of available space.

In addition, by combusting BOG generated from cargo tanks TK1 to TK4 by means of the idle mode of the gas turbine 142, the gas combustion unit (GCU) mode of the dual-fuel auxiliary boiler (not shown), and/or the DFGE 146, the GCU may be optionally omitted, thereby securing available space.

In addition, referring to FIG. 8, the second fuel tank 143 may be an independent tank, such as an IMO Type A tank, and a cofferdam 143a may be additionally installed around the IMO Type A tank. An electrical distribution panel room 147 is arranged vertically between the engine room 141 and the second fuel tank 143, with the top thereof exposed to the upper deck UD. Due to the cofferdam 143a and the electrical distribution panel room 147, the engine room 141 and the second fuel tank 143 may be doubly compartmentalized to ensure safety, and the internal space of the engine room 141 may be reduced.

Meanwhile, the waste heat recovery system 150 may be a supercritical carbon dioxide (sCO₂) power system that produces electricity by operating on a Brayton cycle consisting of two constant-pressure processes and two isentropic processes. In the supercritical CO₂ Brayton cycle, the working fluid remains in a supercritical state throughout the compression, heating, expansion, and cooling processes. However, the waste heat recovery system 150 is not limited to the supercritical carbon dioxide power generation system, and may also generate electricity by driving a turbine using steam produced through heat exchange between waste heat and a working fluid.

That is, as illustrated in FIG. 8, the supercritical CO₂ power system may be disposed adjacent to the stern side of an engine casing 151 and spaced apart from a sunken deck SD by a predetermined height by means of pilotis 152. Accordingly, the system may be arranged without interference with mooring equipment or the like, thereby improving space utilization. In addition, the system may be installed in a space independent from the engine room 141 to ensure the safety of the engine room 141.

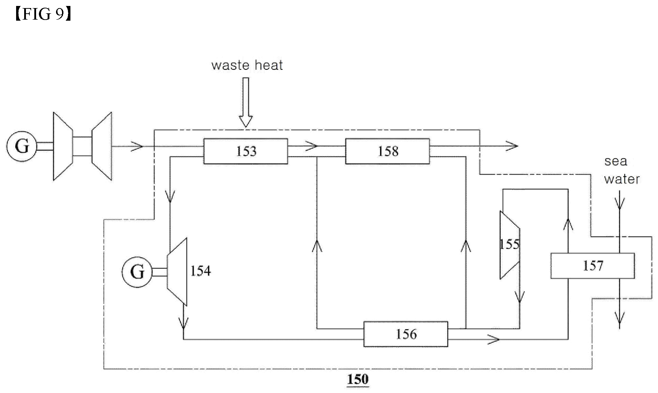

To be specific, referring to FIGS. 8 and 9, the supercritical CO₂ power system may include: a heater 153 disposed in the engine casing 151 and a funnel and configured to recover waste heat of exhaust gas discharged from the gas turbine 142 to heat circulating carbon dioxide; a turbine 154 configured to rotate by a supercritical state of the carbon dioxide heated by the heater 153 to generate electric power; a compressor 155 configured to compress the circulating carbon dioxide; a recuperator 156 configured to perform heat exchange between the carbon dioxide recovered from the turbine 154 and the carbon dioxide supplied from the compressor 155 to the heater 153; a precooler 157 configured to cool the carbon dioxide that has passed through the recuperator 156 from the turbine 154 using seawater, and to supply the cooled carbon dioxide to the compressor 155; and a preheater 158 configured to heat carbon dioxide supplied to the heater 153 through heat exchange between exhaust gas that has passed through the heater 153 and the carbon dioxide from the compressor 155 that bypasses the recuperator 156.

In addition, the waste heat recovery system 150 may be disposed on the side opposite to the side on which the gas turbine 142 is installed (port or starboard) in order to secure space (on the stern side) for the intake of combustion air for the gas turbine 142. For example, when the gas turbine 142 is installed on the port side, the waste heat recovery system 150 may be disposed on the starboard side, and conversely, when the gas turbine 142 is installed on the starboard side, the waste heat recovery system 150 may be disposed on the port side.

Thus, due to the configuration of the ship equipped with a gas turbine and waste heat recovery-based electric propulsion system as described above, electricity may be generated by combusting ammonia gas and LNG by means of a gas turbine, and the waste heat of the gas turbine may be recovered to improve gas turbine efficiency. In addition, by relocating the deckhouse and the wheelhouse toward the bow, an unobstructed view for navigation may be ensured, the height of each deck in the deckhouse may be minimized to reduce construction costs. In case of installing wind-assisted propulsion systems such as rotor sails or wing sails on the upper decks, visibility issues are resolved and the number of installations may be increased. In cases where a fuel tank storing hazardous substances like ammonia is installed at the stern, the deckhouse may be isolated to ensure safety. Vibrations and noise generated in the stern engine room may be blocked without requiring separate vibration or noise insulation structures. The trunk deck space may be efficiently utilized, and a piloti structure prevents safety accidents caused by mooring line snapback. Furthermore, the bow-arranged deckhouse structure may be applied to both newbuilds and retrofitted vessels, and the trunk deck space may be efficiently utilized.

The embodiments described in this specification and the configurations illustrated in the drawings are merely the most preferred embodiments of the present disclosure and do not encompass all aspects of the technical concept of the present disclosure. It should be understood that, as of the filing date of this application, various equivalents and modifications that can replace these embodiments may exist.

## Claims

1. A ship equipped with a gas turbine and waste heat recovery-based electric propulsion system, the ship comprising:
a stern area consisting of:
a gas turbine disposed in an engine room and configured to generate electric power by combustion of a first fuel supplied from a second fuel tank or a second fuel supplied from a cargo tank, and to supply the electric power to an electric propulsion motor;
a second fuel tank disposed in an upper-side free space of the engine room, an upper end of the second fuel tank being exposed to an upper deck, and configured to supply the first fuel to the gas turbine; and
a waste heat recovery system configured to convert waste heat from exhaust gas of the gas turbine into electric power and to supply the electric power to the electric propulsion motor.

2. The ship of claim 1, further comprising:
a cargo area in which the cargo tank used for storing and transporting LNG is disposed; and
a bow area consisting of: a deckhouse located forward of the cargo area in a bow direction, spaced apart from an upper deck of the bow area by a predetermined height, and including a wheelhouse; a bosun store arranged below the upper deck; and a first cofferdam having a specific structure and arranged between the cargo area and both the deckhouse and the bosun store.

3. The ship of claim 2, wherein the waste heat recovery system is a supercritical carbon dioxide (sCO₂) power system.

4. The ship of claim 3, wherein the supercritical CO₂ power system is disposed on a stern side of an engine casing.

5. The ship of claim 4, wherein the supercritical CO₂ power system is disposed at a predetermined height above a sunken deck by means of pilotis.

6. The ship of claim 4, wherein the supercritical CO₂ power system comprises:
a heater disposed in the engine casing or a funnel and configured to recover waste heat of exhaust gas discharged from the gas turbine to heat carbon dioxide;
a turbine configured to rotate by a supercritical state of the carbon dioxide heated by the heater to generate electric power;
a compressor configured to compress carbon dioxide;
a recuperator configured to perform heat exchange between carbon dioxide recovered from the turbine and carbon dioxide supplied from the compressor to the heater;
a precooler configured to cool carbon dioxide that has passed through the recuperator from the turbine, and to supply the cooled carbon dioxide to the compressor; and
a preheater configured to heat carbon dioxide supplied to the heater through heat exchange between exhaust gas that has passed through the heater and the carbon dioxide from the compressor that bypasses the recuperator.

7. The ship of claim 2, wherein the first fuel is ammonia gas, and the second fuel is boil-off gas (BOG), which is evaporated LNG, generated from the cargo tank or natural gas obtained by forced vaporization of LNG.

8. The ship of claim 7, wherein the cargo tank is a membrane tank.

9. The ship of claim 2, wherein a top surface of the second fuel tank or a top surface of a second fuel tank's compartment is formed to match height and shape of a trunk deck of the cargo tank.

10. The ship of claim 9, further comprising:
a fuel preparation room in which an ammonia supply system for supplying ammonia gas to the gas turbine is installed; and
a cargo compressor room in which an LNG supply system is installed for supplying boil-off gas (BOG), which is evaporated LNG, or natural gas obtained by forced vaporization of LNG to the gas turbine.

11. The ship of claim 10, wherein the fuel preparation room is arranged above the second fuel tank, and the cargo compressor room is arranged above a trunk deck of the cargo area.

12. The ship of claim 10, wherein both the fuel preparation room and the cargo compressor room are installed above the second fuel tank.

13. The ship of claim 10, wherein both the fuel preparation room and the cargo compressor room are installed above a trunk deck of the cargo area.

14. The ship of claim 10, wherein the fuel preparation room and the cargo compressor room are disposed separately on port and starboard sides, respectively, or arranged predominantly on either the port or starboard side.

15. The ship of claim 2, wherein a dual fuel generator engine (DFGE) is additionally disposed in the engine room, and a first fuel tank configured to supply fuel to the DFGE is disposed below the upper deck of the bow area.

16. The ship of claim 15, wherein a dual-fuel auxiliary boiler configured to produce steam required on board is additionally disposed in the stern area.

17. The ship of claim 16, wherein the dual-fuel auxiliary boiler is disposed on a first deck, the gas turbine is disposed on a second deck, and the DFGE is disposed on a third deck.

18. The ship of claim 16, wherein the dual-fuel auxiliary boiler is disposed on a starboard side, the gas turbine is disposed on a port side, and the DFGE is disposed on the starboard side.

19. The ship of claim 16, wherein the dual-fuel auxiliary boiler is disposed on a port side, the gas turbine is disposed on a starboard side, and the DFGE is disposed on the port side.

20. The ship of claim 16, wherein by means of an idle mode of the gas turbine, a gas combustion unit (GCU) mode of the dual-fuel auxiliary boiler, or the DFGE, BOG generated from the cargo tank is combusted.

21. The ship of claim 2, wherein the first coffer dam is formed in an "L" shape and separates the deckhouse and the bosun store from the cargo tank of the cargo area.

22. The ship of claim 2, wherein the deckhouse is supported at a predetermined height by a plurality of pilotis arranged in a specific pattern from the upper deck, thereby creating a bow mooring equipment area.

23. The ship of claim 22, wherein the pilotis are arranged to be aligned with main webs of the bow area and main walls of cabins of the deckhouse.

24. The ship of claim 22, wherein a bow pump room is compartmentalized and arranged beneath the bosun store.

25. The ship of claim 24, wherein a chain locker is disposed in the bow pump room, and an anchor chain is stowed in the chain locker via the bow mooring equipment area.

26. The ship of claim 15, wherein in a lower portion of the bow area, a forepeak tank, a bow pump room, and an equipment/tank arrangement area, in which the first fuel tank, a ballast water tank, a deckhouse equipment room, and a grey water holding tank are compartmentalized, are arranged.

27. The ship of claim 1, wherein an electrical distribution panel room is vertically disposed between the engine room and the second fuel tank, and an upper portion of the electrical distribution panel room is exposed to the upper deck.

28. The ship of claim 27, wherein a second cofferdam is installed between the electrical distribution panel room and the second fuel tank.
